# FASCICULE DE BREVET EUROPEEN

(11) **EP 3 146 681 B1**
(45) Date de publication et mention de la délivrance du brevet: **24.08.2022**
(21) Numéro de dépôt: 15732314.8
(22) Date de dépôt: 21.05.2015
(51) Int. Cl.: H04L 45/30

(54) **PROCÉDÉ DE DISTRIBUTION POUR UNE LIAISON À LIENS MULTIPLES ET HÉTÉROGÈNES**
VERTEILUNGSVERFAHREN FÜR EINE VERBINDUNG MIT MEHREREN HETEROGENEN VERBINDUNGEN
DISTRIBUTION METHOD FOR A CONNECTION WITH MULTIPLE HETEROGENEOUS LINKS

(30) Priorité: 23.05.2014 FR 1454645
(43) Date de publication de la demande: 29.03.2017
(73) Titulaire: EKINOPS FRANCE, 78140 Vélizy-Villacoublay (FR)
(72) Inventeur: OTTAVJ, Luc, F-06560 Valbonne (FR)
(74) Mandataire: Cabinet Netter
(86) Numéro de dépôt international: PCT/FR2015/051334
(87) Numéro de publication internationale: WO 2015/177471

(56) Documents cités:
- US-A1- 2002 122 394
- US-A1- 2010 061 244
- JIAYUE HE ET AL: "Toward internet-wide multipath routing", IEEE NETWORK, IEEE SERVICE CENTER, NEW YORK, NY, US, vol. 22, no. 2, 1 mars 2008 (2008-03-01), pages 16-21, XP011206506, ISSN: 0890-8044
- Philipp S. Schmidt ET AL: "Socket intents : leveraging application awareness for multi-access connectivity", Proceedings of the ninth ACM conference on Emerging networking experiments and technologies, CoNEXT '13, 1 January 2013 (2013-01-01), pages 295-300, XP055588993, New York, New York, USA DOI: 10.1145/2535372.2535405 ISBN: 978-1-4503-2101-3
- ZANDER S ET AL: "Automated Traffic Classification and Application Identification using Machine Learning", LOCAL COMPUTER NETWORKS, 2005. 30TH ANNIVERSARY. THE IEEE CONFERENCE O N SYDNEY, AUSTRALIA 15-17 NOV. 2005, PISCATAWAY, NJ, USA,IEEE, 15 November 2005 (2005-11-15), pages 250-257, XP010859197, DOI: 10.1109/LCN.2005.35 ISBN: 978-0-7695-2421-4

## Description

La présente invention concerne un procédé de routage de paquets dans un réseau de communication par transport de paquets. Plus particulièrement, la présente invention adresse le problème de l'optimisation de l'utilisation d'une liaison, entre un nœud d'entrée et un nœud de sortie, ladite liaison comportant au moins deux chemins hétérogènes, en ce qu'ils utilisent des liens présentant des caractéristiques différentes, principalement en termes de délai et/ou de débit.

Dans le cas d'un protocole TCP par exemple, un standard pour liaison à chemins multiples existe : TCP pour chemins multiples ou MPTCP (de l'anglais Multi Path TCP). Ce protocole définit comment un flot et ses paquets peuvent être adaptés pour être transmis sur les différents chemins et restitués à l'identique à l'arrivée. Cependant ce standard reste silencieux sur la façon de distribuer les paquets entre les différents chemins et laisse l'implémentation libre sur ce point.

Différents procédés sont connus et l'on peut ainsi citer un procédé tournant ou pondéré tournant, encore nommé en anglais « round robin » ou « weighted round robin », affectant de manière circulaire les paquets aux différents liens de départ des différents chemins, le cas échéant en fonction de leur capacité ou disponibilité.

La demande de brevet US 2002/122394 A1, divulgue l'utilisation de chemin multiples et se base sure l'association d'applications identifiées par leurs adresses à des routes de caractéristiques différentes.

Le principe de distribution décrit dans la demande de brevet US 2010/061244 A1 consiste ainsi à prévenir l'engorgement de queues en sortie et, dès que la taille d'une queue dépasse un certain seuil, à acheminer le trafic par l'autre lien.

Le document "Socket intents : leveraging application awareness for multi-access connectivity" propose d'étendre l'interface de programmation standard "Socket" (Socket API) pour permettre à l'application de transmettre cette information. Le système d'exploitation choisit l'interface la plus appropriée pour rétablir la connexion permettant de télécharger le contenu en question.

Cependant, dans le cas de chemins hétérogènes, présentant des caractéristiques différentes, tel que par exemple, un chemin empruntant un lien ADSL, ou bien un lien satellite ou encore un lien 3G ou 4G, un tel procédé de distribution s'avère le plus souvent peu profitable en termes d'expérience utilisateur, en ce que la performance globale obtenue avec 2 ou 3 chemins affectés de manière circulaire peut s'avérer peu ou pas améliorée, voire même dégradée, relativement à la performance obtenue avec un seul de ces chemins.

La présente invention remédie à ces différents inconvénients et propose un procédé de distribution des paquets parmi au moins deux chemins hétérogènes d'une liaison, permettant d'optimiser la performance globale de la liaison, afin de tirer profit de la présence de chemins multiples.

L'invention a ainsi pour objet un procédé de distribution par routage, pour un réseau de communication par transport de paquets comprenant une liaison entre un nœud d'entrée et un nœud de sortie, ladite liaison comportant au moins deux chemins utilisant des liens hétérogènes, pour distribuer un paquet entrant vers un desdits liens, le procédé comprenant les étapes suivantes :
- identification d'un objet, regroupant de manière cohérente des paquets, parmi les paquets entrants, un objet étant constitué d'un ensemble cohérent de paquets,
- détermination de la taille de l'objet identifié,
- transmission d'un paquet entrant sur un desdits chemins choisi en fonction de la taille de l'objet auquel le paquet appartient.

Selon une autre caractéristique, l'étape d'identification d'un objet comprend une détermination du protocole applicatif par analyse d'au moins un paquet.

Selon l'invention, l'étape d'identification d'un objet comprend une analyse du temps séparant deux paquets entrants successifs, un nouvel objet étant considéré lorsque ce temps est supérieur à un seuil donné.

Selon une autre caractéristique, la taille d'un objet est discrétisée en un nombre de classes de taille, au moins égal au nombre de liens, le choix du chemin et donc du lien s'effectuant en fonction de la classe de taille.

Selon une autre caractéristique, à chaque classe de taille est associé un identifiant, et chaque paquet est marqué de l'identifiant correspondant à la taille de l'objet auquel le paquet appartient.

Selon une autre caractéristique, l'étape de détermination de la taille d'un objet est réalisée, a priori, par analyse d'au moins un des paquets de l'objet.

Selon une autre caractéristique, l'étape de détermination de la taille d'un objet comprend une extraction du contenu d'un des paquets de l'objet.

Selon une autre caractéristique, la taille d'un objet est déduite du type de l'objet.

Selon une autre caractéristique, l'étape de détermination de la taille d'un objet est réalisée de manière incrémentale, et comprend un comptage des paquets entrants appartenant à l'objet.

Selon une autre caractéristique, la taille d'un objet est considérée la plus petite possible en fonction du nombre de paquets entrants déjà reçus, jusqu'à preuve du contraire.

Selon une autre caractéristique, un paquet d'un objet d'au moins une des plus petites tailles est transmis sur le chemin de plus faible délai.

Selon une autre caractéristique, un paquet d'un objet d'au moins une des plus grandes tailles est transmis sur le chemin de plus grand débit.

Selon une autre caractéristique, un paquet d'un objet de taille intermédiaire est transmis sur un des chemins restants choisi de manière tournante.

D'autres caractéristiques, détails et avantages de l'invention ressortiront plus clairement de la description détaillée donnée ci-après à titre indicatif en relation avec des dessins sur lesquels :

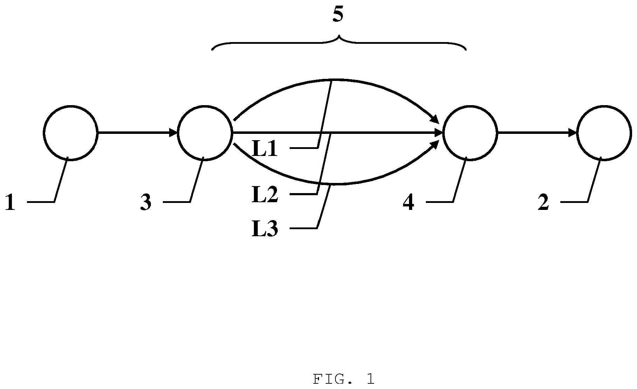

- la figure 1 présente un environnement typique de l'invention.

Selon la figure 1, montrant une partie d'un réseau de communications, comprenant ici quatre nœuds 1-4, un nœud source 1 établit une communication TCP avec un nœud destinataire 2 et envoie des données, découpées en paquets, à ce nœud destinataire 2. Pour cela, de manière classique, un chemin est établi de nœud en nœud entre le nœud source 1 et le nœud destination 2. Ici par exemple le chemin entre le nœud source 1 et le nœud destination 2 comprend les deux nœuds 3,4, mais pourrait en comprendre davantage. Sur une partie du chemin, que l'on nommera liaison 5, plusieurs chemins sont possibles selon qu'on emprunte les liens L1,L2 ou L3. En appelant chemin Li le chemin empruntant le lien Li et liaison Li la connexion TCP établie entre le nœud 3 et le nœud 4 empruntant le chemin Li on voit que la liaison L5 peut être réalisée par une liaison L1 ou L2 ou L3 ou bien par les trois liaisons simultanément. Dans le cadre de l'invention la liaison L5 est réalisée par les trois liaisons L1-L3 utilisées simultanément pour transporter les paquets de la connexion originelle entre les nœuds 1 et 2.

L'invention s'applique à tous types de chemins liens, y compris des chemins hétérogènes similaires ou identiques. Cependant le procédé est plus particulièrement adapté et performant dans le cas de chemins hétérogènes. Il est entendu ici par chemins hétérogènes des chemins empruntant des liens dont les caractéristiques, en termes de délai, ou de débit sont différentes, voire très différentes.

La liaison 5 et les différents liens L1-L3 sont encadrés par un nœud d'entrée 3 et par un nœud de sortie 4. Le nœud d'entrée 3 est en charge des traitements : de tri des paquets entrants, de modification éventuelle des entêtes desdits paquets et de distribution desdits paquets sur l'un ou l'autre des liaisons L1-L3. Le nœud de sortie 4 est en charge de la réception des paquets depuis les différents liaisons L1-L3, de la remise en état des éventuelles modifications et du réordonnancement des paquets avant leur transmission au nœud suivant. Les deux nœuds d'entrée 3 et de sortie 4 interceptent les paquets et les traitent à la volée. Le flot de données en sortie du nœud de sortie 4 est sensiblement identique au flot de données entrant dans le nœud d'entrée 3, afin que la liaison 5 et les nœuds d'entrée et de sortie 3,4 soient totalement transparents pour les nœuds d'extrémité 1,2 et pour un utilisateur.

Ainsi la plupart des traitements décrits dans la présente, est réalisée par le nœud d'entrée 3 et/ou le nœud de sortie 4. Les étapes plus particulièrement associées aux différentes étapes du procédé, sont réalisées par le nœud d'entrée 3.

Les nœuds d'entrée 3 et de sortie 4, peuvent être implémentés, par exemple, chacun par un serveur à performances améliorées ou PEP, de l'anglais « performance enhanced proxy », tel que défini par les documents RFC 3135 ou RFC 3449 publiés par l'IETF. Ces deux PEPs sont avantageusement appariés.

Le protocole d'échange optimise entre les deux PEP consiste à établir pour chaque connexion interceptée autant de connexions qu'il y a de liens différents sur le nœud 3. Comme indique ce protocole pourra être MPTCP ou tout autre protocole garantissant le réordonnancement des paquets de la connexion originelle par le PEP distant.

Le procédé selon l'invention concerne principalement la distribution ou ventilation des paquets entrants dans le nœud d'entrée 3, sur l'un ou l'autre des liaisons L1-L3 (et donc liens L1-L3) reliant le nœud d'entrée 3 au nœud de sortie 4. Ainsi le procédé décide, pour chaque paquet, sur quel liaison L1-L3 le paquet doit être transmis au nœud de sortie 4.

Le principe directeur est de transmettre un paquet sur une des liaisons L1-L3, ladite liaison étant choisie en fonction de la taille de l'objet auquel le paquet appartient.

Pour les besoins de la transmission sur un réseau de communication, toute donnée est découpée en une succession de paquets, sensiblement de même taille. Aussi, une donnée ou objet est constitué d'un ensemble cohérent de paquets. Afin de faciliter leur transport, ces paquets sont séparés et ne voyagent pas nécessairement ensemble. Cependant, pour les besoins de leur traitement, et afin d'éviter des mécanismes risquant de dégrader les performances, comme par exemple des mécanismes de réémission, les paquets d'un même objet sont avantageusement temporellement groupés à leur réception par le nœud de sortie 4.

Aussi pour chaque paquet il est recherché l'entité de niveau supérieur ou objet qui confère à un ensemble de paquets leur cohérence. Une fois un objet identifié, une des caractéristiques principales utilisées par le procédé est la taille dudit objet. Cette taille peut être comptée en unités de stockage, par exemple kilo-octets, ou en nombre de paquets. Cette taille est utilisée de manière discriminante pour distribuer un paquet, avantageusement ensemble avec les autres paquets d'un même objet, sur l'une ou l'autre desdites liaisons L1-L3.

Pour cela, le procédé de distribution comprend les étapes suivantes. Une première étape consiste, pour un paquet entrant, à identifier à quel objet ledit paquet appartient. Une deuxième étape, une fois l'objet identifié, consiste à déterminer la taille de l'objet identifié et à l'associer au paquet. Enfin, au cours d'une troisième étape, il est choisi, en fonction de la taille de l'objet auquel le paquet appartient, un des liens pour transmettre ledit paquet du nœud d'entrée 3 au nœud de sortie 4.

Il va maintenant être décrit la première étape d'identification de l'objet.

Selon un mode de réalisation, l'identification d'un objet est réalisée par analyse du contenu d'au moins un paquet. Cette analyse comprend une analyse d'un ou plusieurs paquet(s), de son/leur entête ou de son/leur charge utile, afin de reconnaitre un type de contenu et ainsi de pouvoir détecter un objet. Une fois qu'un objet est détecté, l'analyse des autres paquets peut en bénéficier et un nouveau paquet entrant sera avantageusement testé pour vérifier s'il appartient ou non à un objet précédemment détecté.

Selon un mode de réalisation, l'étape d'identification d'un objet passe par un préliminaire consistant à déterminer le protocole applicatif. Une telle approche nécessite une connaissance des différents protocoles et par exemple un dictionnaire de reconnaissance permettant de déterminer en fonction de la forme d'un paquet le protocole applicatif dont il ressort. De la même manière une fois le protocole applicatif déterminé, il peut être déterminé le type de l'objet par reconnaissance d'un mot clé, d'une commande, ou d'un champ particulier dans un paquet, connu pour un protocole donné. Cette approche peut être qualifiée de syntaxique et se base sur une reconnaissance de formes présentes dans un paquet.

Une telle approche n'est bien évidemment possible que si le contenu des paquets est lisible en clair et n'est pas possible pour des données cryptées, telles que celles employées par des protocoles sécurisés comme SSL, HTTPS, POPS, IMAPS, CIFS, SMTPS.

Selon l'invention, l'identification d'un objet est réalisée par analyse des durées séparant les paquets entrants successifs. Ainsi, tant que la durée entre deux paquets successifs reste faible, il peut être considéré que ces deux paquets appartiennent à un même objet. Au contraire, si la durée entre deux paquets successifs s'allonge, jusqu'à devenir supérieure à un seuil donné, il est considéré qu'il s'agit d'un intervalle entre deux objets, et le second paquet est réputé appartenir à un nouvel objet.

Le seuil temporel utilisé à cet effet est typiquement un paramètre configurable. La détermination de sa valeur peut être réalisée par essais et erreurs lors d'une phase d'initialisation. Dans le cas d'un protocole TCP, ce seuil peut être calculé à partir des variables internes de la pile TCP. Ainsi le paramètre délai de transmission en boucle ou RTT, de l'anglais « Round Trip delay Time » ou sa version filtrée sRTT de l'anglais « smooth » RTT peut être utilisé pour construire un seuil x*RTT ou x*sRTT, avec x coefficient configurable, généralement strictement supérieur à 1.

Une telle approche est applicable tant aux données en clair, telles que celles employées par des protocoles non sécurisés comme FTP, HTTP, POP, IMAP, SMTP, qu'aux données cryptées, telles que celles employées par des protocoles sécurisés comme SSL, HTTPS, POPS, IMAPS, CIFS, SMTPS.

Il va maintenant être décrit la deuxième étape de détermination de la taille de l'objet.

Quelle que soit l'unité (Ko ou nombre de paquet) utilisée pour quantifier la taille d'un objet, cette taille est avantageusement discrétisée en un nombre de classes de taille. Ces classes réalisent une partition des nombres positifs. Le nombre de classes reste avantageusement limité à quelques unités et est au moins égal au nombre de liens L1-L3. Ainsi pour une liaison à 3 liens, on aura au moins trois classes de tailles : [0,x1[, [x1,x2[ et [x2,+∞[, avec x1<x2, disjointes et couvrant tous les nombres positifs (toutes les tailles).

Une telle discrétisation de la taille, simplifie l'étape de distribution d'un paquet, le choix du lien pouvant avantageusement être effectué en fonction de la classe de taille.

Selon un mode de réalisation, un identifiant est associé à chaque classe de taille. Ainsi l'étape de détermination de la taille de l'objet contenant un paquet détermine, pour chaque paquet, la classe de taille auquel il appartient et peut associer l'identifiant correspondant au paquet.

Avantageusement un tel identifiant est utilisé, lors de l'étape de détermination, pour marquer un paquet en fonction de la taille ou classe de taille de l'objet auquel le paquet appartient.

En fonction du protocole et de la forme des paquets, un tel marquage peut être réalisé de différentes manières. Ainsi en TCP il est possible d'utiliser le champ DSCP pour lui affecter un identifiant de taille ou de classe de taille. Une autre manière de procéder est d'inclure un tel identifiant dans une étiquette (en anglais Tag) de métadonnées associée audit paquet à marquer.

Lors de l'étape de distribution, l'identifiant déterminant une taille d'objet associé au paquet peut être relu, et en fonction de sa valeur choisir le lien L1-L3 à utiliser pour transporter le paquet.

Une fois un objet identifié, la détermination de la taille dudit objet peut être réalisée de différentes manières.

Selon un premier mode de réalisation, les paquets sont lisibles, reconnaissables en termes de protocole applicatif et de plus, au moins un des paquets d'un objet comporte une indication de la taille dudit objet. Dans ce cas, il est possible d'extraire un contenu d'un tel paquet, indicatif de la taille de l'objet. La taille peut être directement extraite dans le cas où un des paquets de l'objet contient un paramètre de taille. La taille peut encore être indirectement déduite dans le cas où un élément de contenu d'au moins un paquet est indicatif de la taille. L'analyse d'un ou plusieurs paquet(s) permet ainsi d'obtenir la taille de l'objet.

Selon ce mode de réalisation, la taille est extraite d'un élément contenu dans un des paquets, avantageusement un des premiers paquets de l'objet ou répété dans tous les paquets de l'objet. Ainsi la taille de l'objet est avantageusement connue par analyse d'au moins un paquet. On parle dans ce cas de détermination « a priori » de la taille.

Selon ce mode de réalisation, la détermination du protocole applicatif, permet par exemple de savoir, pour une approche directe, où et sous quelle forme un paramètre indiquant la taille de l'objet est stocké dans un paquet.

Alternativement toujours selon ce mode de réalisation, la détermination du protocole applicatif peut permettre de déterminer quels types d'objets on peut s'attendre à rencontrer dans le flot de données et comment identifier un objet ou un type d'objet.

Ainsi dans le cas illustratif d'un protocole applicatif HTTP, un objet pourra être une commande GET, POST, etc., ou une réponse sous la forme d'une page html, xml, pdf, d'un document de style, d'un script, d'une image, d'une vidéo, etc. Une fois que l'on a identifié le protocole HTTP, une connaissance de HTTP indique où peut être trouvé le mot clé qui définit le type d'objet et ainsi permettre d'identifier le type de l'objet.

La détermination du type d'un objet est essentiellement utile pour déterminer indirectement la taille de l'objet. Ainsi par exemple un objet de type commande présente le plus souvent une taille réduite, typiquement appartenant à la plus petite classe de taille. A contrario un objet de type vidéo présente le plus souvent une taille plus importante. Un mode de réalisation peut consister à déterminer le type d'un objet et ensuite, par exemple au moyen d'une table de correspondance, de déterminer une taille en fonction du type de l'objet.

Selon un autre mode de réalisation de l'étape de détermination de la taille d'un objet, il peut n'être pas possible, ou pas souhaité d'extraire la taille du contenu d'au moins un paquet. L'impossibilité peut venir du fait que les paquets ne contiennent pas d'information de taille, ni directe ni indirecte, ou encore du fait que lesdits paquets ne sont pas lisibles, comme dans le cas de paquets cryptés.

Selon cet autre mode de réalisation, la taille d'un objet peut être déterminée en comptant les paquets entrants. On parle dans ce cas de détermination « incrémentale » de la taille de l'objet. Dans ce cas, dès qu'un paquet appartenant à un nouvel objet est détecté, un compteur est initialisé et incrémenté à chaque nouvelle entrée d'un paquet de cet objet.

Un avantage de cette méthode est qu'elle est applicable dans de plus nombreux cas, et notamment au cas où le protocole utilise un cryptage. Un inconvénient de cette méthode est que la taille de l'objet n'est connue qu'après l'arrivée du dernier paquet de l'objet et donc à la fin. Ceci peut être préjudiciable, en ce qu'il n'est généralement pas possible, et plus particulièrement dans le cas d'objets de grande taille, d'attendre l'arrivée du dernier paquet pour traiter, et notamment distribuer sur un des liens L1-L3, les premiers paquets entrés.

Pour pallier cet inconvénient, selon une caractéristique avantageuse, le procédé détermine une taille d'objet pour un paquet, avant que la taille effective ne soit effectivement connue, de la manière suivante. Lorsqu'un nouvel objet est identifié, sa taille est considérée être la plus petite possible, tant que le nombre de paquets entrants appartenant à cet objet ne contredit pas cette hypothèse et ne prouve le contraire. Ainsi les premiers paquets sont traités comme si la taille de l'objet était la plus petite possible. Dès qu'un paquet supplémentaire, au-dessus de ladite taille la plus petite est reçu, cette hypothèse est invalidée et les paquets suivants sont traités comme si la taille de l'objet était plus grande. Ceci est appliqué tant que cette nouvelle hypothèse reste vraie. Si cette hypothèse devient à nouveau fausse, une nouvelle taille plus grande est considérée. Et ainsi de suite itérativement.

Ainsi, en l'absence de classe de taille, le ième paquet entrant est réputé appartenir à un objet de taille i+1 et est traité/distribué comme tel.

Cette caractéristique est plus avantageuse avec des classes de tailles.

Afin d'illustrer ce mode de réalisation, un exemple avec 3 classes de tailles est présenté. Une première classe de taille C1, ou classe de plus petite taille, est définie pour les tailles comprises entre 1 et n1 paquets, une deuxième classe de taille C2 est définie pour les tailles comprises entre n1+1 et n2 et une troisième classe de taille C3, ou classe de plus grande taille, est définie pour les tailles comprises entre n2+1 et +∞, avec n1<n2, n1 et n2 entiers. Lorsqu'un nouvel objet est détecté, il est considéré être de la plus petite taille. Ses premiers paquets se voient donc affecter une classe de taille C1. Cette hypothèse peut être valablement retenue pour les premiers paquets, jusqu'à réception du n1ème paquet. Cependant si un n1+1ème paquet arrive, cette hypothèse devient fausse. Il est prouvé que la taille de l'objet n'appartient pas à la classe C1. Aussi à partir du n1+1ème paquet il est considéré que la taille de l'objet appartient à la classe C2. Ceci peut être fait jusqu'à l'éventuelle arrivée d'un n2+1ème paquet. Si un n2+1ème paquet est reçu, la preuve est faite que la taille de l'objet n'appartient pas à la classe C2. Aussi à partir du n2+1ème paquet il est considéré que la taille de l'objet appartient à la classe C3. Cette classe C3 étant la dernière, peut être appliquée à tous les paquets suivants éventuels.

Les paramètres n1, n2, n3 .. np, déterminant le nombre et les étendues des différentes classes sont configurables en fonction des liens L1-L3 disponibles pour une liaison 5 et, le cas échéant, en fonction des caractéristiques des flots de données transportés.

Ainsi l'estimation de la taille de l'objet change avec le temps et l'arrivée de nouveaux paquets. Cependant, dès l'entrée d'un paquet, il est possible de lui affecter une taille ou une classe de taille et la distribution du paquet sur les liaisons L1-L3 peut être réalisée en fonction de cette taille estimée affectée.

Alternativement, lorsque la détermination de la taille d'un objet est réalisée de manière incrémentale, il est possible de ne considérer que deux classes de taille. Dans ce cas il est avantageux de ne conserver qu'une classe de plus petite taille, par exemple C1 (tailles comprises entre 0 et n1) et une classe de grande taille regroupant toutes les autres classes C2..Cn (tailles comprises entre n1+1 et +∞).

Il va maintenant être décrit la troisième étape de choix de la liaison et donc du lien pour transmettre un paquet.

Au cours des étapes précédentes, chaque paquet entrant s'est vu associé un paramètre indicatif de la taille de l'objet auquel il appartient. Ce paquet peut maintenant être transmis sur une des liaisons L1-L3 en fonction de ce paramètre de taille.

Selon un premier mode de réalisation, lorsqu'un paquet est associé à l'une aux moins des plus petites tailles d'objet, ce paquet est avantageusement transmis sur le lien L1-L3 de plus faible délai.

Ainsi par exemple, en fonction des choix d'implémentation, un paquet sera transmis sur le lien de plus faible délai s'il est associé à une taille appartenant à la première classe C1, respectivement s'il est associé à une taille appartenant aux deux premières classes C1 ou C2, etc.

Ainsi les paquets appartenant effectivement aux petits objets ou encore les premiers paquets appartenant à des objets dont la taille est déterminée de manière incrémentale sont transmis sur le lien de plus faible délai.

Selon un autre mode de réalisation, lorsqu'un paquet est associé à l'une aux moins des plus grandes tailles d'objet, ce paquet est avantageusement transmis sur la liaison L1-L3 de plus fort débit.

Ainsi par exemple, en fonction des choix d'implémentation, un paquet sera transmis sur la liaison de plus fort débit s'il est associé à une taille appartenant à la dernière classe C3, respectivement s'il est associé à une taille appartenant aux deux dernières classes C2 ou C3, etc.

Ainsi les paquets appartenant effectivement aux gros objets, ou encore les derniers paquets appartenant à des objets dont la taille est déterminée de manière incrémentale, sont transmis sur la liaison de plus fort débit.

Ensuite, tous les paquets déterminés comme appartenant à des objets de taille intermédiaire peuvent être transmis sur une des liaisons L1-L3 restantes. On entend ici par taille intermédiaire une taille non comprise dans lesdites au moins une des plus petites tailles et non comprise dans lesdites au moins une des plus grandes tailles. Les liaisons restantes sont ici les liaisons qui n'ont pas été retenues pour transmettre les paquets appartenant à des objets dont la taille appartient à l'une aux moins des plus petites tailles d'objet et qui n'ont pas été retenus pour transmettre les paquets appartenant à des objets dont la taille appartient à l'une aux moins des plus grandes tailles d'objet. S'il y a plusieurs liaisons ainsi restantes, une liaison peut être choisie de manière tournante ou tournante pondérée.

Il va maintenant être exposé des exemples de gains quantitatifs observés par la mise en place de l'invention sur différentes configurations multi-liens.

En considérant une transmission d'un flot de données comprenant une page HTML P de 191KO, composée de 3 objets E1, E2, E3 de tailles respectives 1K, 60K et 130K, et en utilisant des liaisons établies sur des chemins choisis parmi :
- un chemin satellitaire de débit 10Mb/s et de délai 700ms,
- un chemin ADSL de débit 1Mb/s et de délai 40 ms,
- un chemin 3G de débit 200Kb/s et de délai 100 ms,
La page P est entièrement transmise en :
- 3,7 s avec une mono liaison satellite,
- 2 s avec une mono liaison ADSL,
- 8 s avec une mono liaison 3G.

En appliquant l'invention la transmission de la page P est réalisée en :
- 1,4 s avec une liaison combinée satellite + ADSL,
- 1,6 s avec une liaison combinée satellite + 3G,

Il ressort ainsi qu'un utilisateur équipé d'un abonnement satellite et d'un abonnement ADSL additionnel obtient avec l'invention un gain d'un facteur proche de 3 par rapport à une simple liaison satellite, et un gain d'un facteur supérieur à 2 s'il est équipé d'un abonnement satellite et d'un abonnement 3G additionnel.

De même un utilisateur équipé d'un abonnement 3G obtient avec l'invention et un abonnement satellite additionnel un gain d'un facteur 5.

Ainsi dans une configuration combinée satellite + ADSL, respectivement satellite + 3G, la liaison satellite est celle ayant le plus fort débit et transmet les objets E2 et E3 et la liaison, respectivement 3G, est celle ayant le plus faible délai et transmet l'objet E1. On suppose dans cet exemple que le seuil n1 de la première classe C1 correspond à une taille d'objet de 2 Ko.

Tous ce qui a été précédemment décrit l'a été en ne considérant qu'un seul sens de parcours, du nœud d'entrée 3 vers le nœud de sortie 4. Il est bien évidement applicable, alternativement ou complémentairement, à un sens de parcours inverse, le nœud d'entrée 3 devenant nœud de sortie et le nœud de sortie 4 devenant nœud d'entrée.

## Revendications

1. Procédé de distribution par routage, pour un réseau de communication par transport de paquets comprenant une liaison (5) entre un nœud d'entrée (3) et un nœud de sortie (4), ladite liaison (5) pouvant être établie par au moins deux chemins différents empruntant au moins deux liens (L1-L3) hétérogènes, pour distribuer un paquet entrant vers un desdits liens (L1-L3), **caractérisé en ce que** le procédé comprend les étapes suivantes :
- identification d'un objet, regroupant de manière cohérente des paquets, parmi les paquets entrants, un objet étant constitué d'un ensemble cohérent de paquets, l'étape d'identification d'un objet comprenant une analyse du temps séparant deux paquets entrants successifs, un nouvel objet étant considéré lorsque ce temps est supérieur à un seuil donné,
- détermination de la taille de l'objet identifié,
- transmission d'un paquet entrant sur un desdits liens (L1-L3) choisi en fonction de la taille de l'objet auquel le paquet appartient.

2. Procédé selon la revendication 1, où l'étape d'identification d'un objet comprend une détermination du protocole applicatif par analyse d'au moins un paquet.

3. Procédé selon l'une quelconque des revendications 1 à 2, où la taille d'un objet est discrétisée en un nombre de classes de taille, au moins égal au nombre de liens (L1-L3), le choix du lien s'effectuant en fonction de la classe de taille.

4. Procédé selon la revendication 3, où à chaque classe de taille est associé un identifiant, et où chaque paquet est marqué de l'identifiant correspondant à la taille de l'objet auquel le paquet appartient.

5. Procédé selon l'une quelconque des revendications 1 à 4, où l'étape de détermination de la taille d'un objet est réalisée, a priori, par analyse d'au moins un des paquets de l'objet.

6. Procédé selon la revendication 5, où l'étape de détermination de la taille d'un objet comprend une extraction du contenu d'un des paquets de l'objet.

7. Procédé selon la revendication 5 ou 6, où la taille d'un objet est déduite du type de l'objet.

8. Procédé selon l'une quelconque des revendications 1 à 4, où l'étape de détermination de la taille d'un objet est réalisée de manière incrémentale, et comprend un comptage des paquets entrants appartenant à l'objet.

9. Procédé selon la revendication 8, où la taille d'un objet est considérée la plus petite possible en fonction du nombre de paquets entrants reçus, jusqu'à preuve du contraire.

10. Procédé selon l'une quelconque des revendications 1 à 9, où un paquet d'un objet d'au moins une des plus petites tailles est transmis sur le lien (L1-L3) de plus faible délai.

11. Procédé selon l'une quelconque des revendications 1 à 10, où un paquet d'un objet d'au moins une des plus grandes tailles est transmis sur le lien (L1-L3) de plus grand débit.

12. Procédé selon l'une quelconque des revendications 1 à 11, où un paquet d'un objet de taille intermédiaire est transmis sur un des liens (L1-L3) restants choisi de manière tournante.

## Patentansprüche

1. Verteilungsverfahren durch Routing für ein Kommunikationsnetz durch Pakettransport, umfassend eine Verbindung (5) zwischen einem Eingangsknoten (3) und einem Ausgangsknoten (4), wobei die Verbindung (5) durch mindestens zwei unterschiedliche Wege hergestellt werden kann, die mindestens zwei heterogene Links (L1-L3) nehmen, um ein eingehendes Paket zu einem der Links (L1-L3) zu verteilen, **dadurch gekennzeichnet, dass** das Verfahren die folgenden Schritte umfasst:
- Identifizieren eines Objekts, das Pakete aus den eingehenden Paketen kohärent gruppiert, wobei ein Objekt aus einer kohärenten Anordnung von Paketen besteht, wobei der Schritt des Identifizierens eines Objekts eine Analyse der Zeit umfasst, die zwei aufeinanderfolgende eingehende Pakete trennt, wobei ein neues Objekt berücksichtigt wird, wenn diese Zeit größer als eine gegebene Schwelle ist,
- Bestimmen der Größe des identifizierten Objekts,
- Übertragen eines eingehenden Pakets über einen der in Abhängigkeit von der Größe des Objekts, zu dem das Paket gehört, ausgewählten Links (L1-L3).

2. Verfahren nach Anspruch 1, wobei der Identifikationsschritt eines Objekts eine Bestimmung des Anwendungsprotokolls durch Analyse mindestens eines Pakets umfasst.

3. Verfahren nach einem der Ansprüche 1 bis 2, wobei die Größe eines Objekts in eine Anzahl von Größenklassen diskretisiert wird, die mindestens gleich der Anzahl der Links (L1-L3) ist, wobei die Auswahl des Links in Abhängigkeit von der Größenklasse erfolgt.

4. Verfahren nach Anspruch 3, wobei jeder Größenklasse eine Kennung zugeordnet ist und wobei jedes Paket mit der Kennung markiert ist, die der Größe des Objekts entspricht, zu dem das Paket gehört.

5. Verfahren nach einem der Ansprüche 1 bis 4, wobei der Schritt des Bestimmens der Größe eines Objekts apriorisch durch Analyse von mindestens einem der Pakete des Objekts durchgeführt wird.

6. Verfahren nach Anspruch 5, wobei der Schritt des Bestimmens der Größe eines Objekts eine Extraktion des Inhalts von einem der Pakete des Objekts umfasst.

7. Verfahren nach Anspruch 5 oder 6, wobei die Größe eines Objekts vom Typ des Objekts abgeleitet wird.

8. Verfahren nach einem der Ansprüche 1 bis 4, wobei der Schritt des Bestimmens der Größe eines Objekts inkremental durchgeführt wird und ein Zählen der eingehenden Pakete umfasst, die zum Objekt gehören.

9. Verfahren nach Anspruch 8, wobei die Größe eines Objekts als die kleinstmögliche in Abhängigkeit von der Anzahl empfangener eingehender Pakete bis zum Beweis des Gegenteils angesehen wird.

10. Verfahren nach einem der Ansprüche 1 bis 9, wobei ein Paket eines Objekts mit mindestens einer der kleinsten Größen über den Link (L1-L3) mit der kürzesten Frist übertragen wird.

11. Verfahren nach einem der Ansprüche 1 bis 10, wobei ein Paket eines Objekts mit mindestens einer der größten Größen über den Link (L1-L3) mit dem größten Durchsatz übertragen wird.

12. Verfahren nach einem der Ansprüche 1 bis 11, wobei ein Paket eines Objekts mit einer Zwischengröße über einen der restlichen Links (L1-L3) im Umlaufauswahlverfahren übertragen wird.

## Claims

1. A routing distribution method, for a packet transport communication network comprising a connection (5) between an input node (3) and an output node (4), said connection (5) being able to be established by at least two different paths using at least two heterogeneous links (L1-L3), to distribute an incoming packet toward one of said links (L1-L3), **characterized in that** the method comprises the following steps:
- identifying an object, grouping packets together coherently, among the incoming packets, an object being made up of a coherent set of packets, the step for identifying an object comprises an analysis of the time separating two successive incoming packets, a new object being considered when this time exceeds a given threshold,
- determining the size of the identified object,
- sending an incoming packet onto one of said links (L1-L3) chosen based on the size of the object to which the packet belongs.

2. The method according to claim 1, wherein the step for identifying an object comprises determining the application protocol by analyzing at least one packet.

3. The method according to any one of claims 1 to 2, wherein the size of an object is discretized into a number of size classes, at least equal to the number of links (L1-L3), the choice of the link being made based on the size class.

4. The method according to claim 3, wherein each size class is associated with an identifier, and each packet is marked with the identifier corresponding to the size of the object to which the packet belongs.

5. The method according to any one of claims 1 to 4, wherein the step for determining the size of an object is carried out, a priori, by analyzing at least one of the packets of the object.

6. The method according to claim 5, wherein the step for determining the size of an object comprises an extraction of the content of one of the packets of the object.

7. The method according to claim 5 or 6, wherein the size of an object is deduced from the type of object.

8. The method according to any one of claims 1 to 4, where the step for determining the size of an object is carried out incrementally, and comprises counting incoming packets belonging to the object.

9. The method according to claim 8, wherein the size of an object is considered to be as small as possible based on the number of incoming packets already received, until proven otherwise.

10. The method according to any one of claims 1 to 9, wherein a packet of an object of at least one of the smallest sizes is sent over the link (L1-L3) with the shortest time.

11. The method according to any one of claims 1 to 10, wherein a packet of an object of at least one of the larger sizes is sent over the link (L1-L3) with the higher throughput.

12. The method according to any one of claims 1 to 11, wherein a packet of an object with an intermediate size is sent over one of the remaining links (L1-L3) chosen on a rotating basis.
